# EUROPÄISCHE PATENTANMELDUNG

(11) **EP 0 833 018 A2**
(43) Veröffentlichungstag der Anmeldung: **01.04.1998**
(21) Anmeldenummer: 97114965.3
(22) Anmeldetag: 29.08.1997
(51) Int. Cl.: E04F 11/18, F16B 7/04

(54) **Gelenkvorrichtung**

(30) Priorität: 27.09.1996 DE 29616848 U
(71) Anmelder: Henkel, Susanne, 74670 Forchtenberg (DE)
(72) Erfinder: Henkel, Susanne, 74670 Forchtenberg (DE)
(74) Vertreter: Vetter, Hans, Dipl.-Phys. Dr.

(57) **Zusammenfassung**

Es wird eine Gelenkvorrichtung zur Verbindung von Rohren (29, 34) miteinander unter variablen Verbindungswinkeln und/oder zur Verbindung von Rohren mit Platten vorgeschlagen. Ein mit wenigstens einem in einem Rohr (29, 34) fixierbaren Haltebolzen (13) radial bezüglich der Gelenkachse verbundenes Lochelement (11) ist mit einer Gelenkfläche (16) versehen, die im montierten Zustand an der Gelenkfläche (15) eines zweiten, entsprechend ausgebildeten Lochelements (10) oder an der am Rohr (34) zu befestigenden, ein mit dem Loch des Lochelements (11) fluchtendes Loch aufweisenden Platte anliegt. Zwei sich in den jeweils miteinander fluchtenden Löchern erstreckende Fixierelemente (24, 33) dienen zur Fixierung der beiden Lochelemente (11, 10) oder des einen Lochelements (11) und der Platte aneinander, wobei das erste, ein Außengewinde aufweisende Fixierelement (33) in das zweite, ein Innengewinde (25) aufweisende Fixierelement (24) einschraubbar ausgebildet ist.

## Beschreibung

Die Erfindung betrifft eine Gelenkvorrichtung zur Verbindung von Rohren miteinander unter variablen Verbindungswinkeln und/oder zur Verbindung von Rohren mit Platten.

Rohre müssen für verschiedene Anwendungen unter verschiedenen Winkeln miteinander verbunden werden, um die gewünschte Gesamtvorrichtung zu bilden, beispielsweise Geländer jeglicher Art, Trennwände, Messesysteme, Möbel od.dgl. In bekannter Weise können die Rohre miteinander verschweißt werden, was allerdings Schmutz, hohe Temperaturen und das Entstehen unerwünschter Gase mit sich bringt. Die hohen Temperaturen beim Schweißen bedingen zum einen eine Entflammungsgefahr und erfordern zum andern eine Nachbehandlung der geschweißten Stellen durch Schleifen od.dgl. Ein nachträglicher Korrosionsschutz und/oder eine Lackierung sind in jedem Falle erforderlich.

Weiterhin sind verschiedene Montageverfahren zur Verbindung von Rohren bekannt, die jedoch meistens wenig variabel und optisch wenig ansprechend sind. Bei einem von der Firma Kukatsch, 58579 Schalksmühle, angebotenen Kugelhandlaufsystem werden die Rohre über Kugeln miteinander verbunden. Hierdurch können zwar Rohre, auch mehrere Rohre, unter variablen Winkeln zusammengefügt werden, jedoch werden bei diesem bekannten Verfahren die Kugeln mit den Rohren verklebt, so daß eine nachträgliche Veränderung nicht mehr möglich und eine Demontage sehr umständlich und aufwendig ist, ähnlich wie bei verschweißten Rohren.

Eine Aufgabe der vorliegenden Erfindung besteht nun darin, eine derartige Gelenkvorrichtung zu schaffen, mit der wenigstens zwei Rohre variabel und leicht lösbar in optisch ansprechender Weise aneinandergefügt werden können.

Diese Aufgabe wird erfindungsgemäß dadurch gelöst, daß ein mit wenigstens einem in einem Rohr fixierbaren Haltebolzen radial bezüglich der Gelenkachse verbundenes Lochelement mit einer Gelenkfläche vorgesehen ist, die im montierten Zustand an der Gelenkfläche eines zweiten, entsprechend ausgebildeten Lochelements oder an der am Rohr zu befestigenden, ein mit dem Loch des Lochelements fluchtendes Loch aufweisenden Platte anliegt, und daß zwei sich in den jeweils miteinander fluchtenden Löchern erstreckende Fixierelemente zur Fixierung der beiden Lochelemente oder des einen Lochelements und der Platte aneinander vorgesehen sind, wobei das erste, ein Außengewinde aufweisende Fixierelement in das zweite, ein Innengewinde aufweisende Fixierelement einschraubbar ausgebildet ist.

Der Vorteil der erfindungsgemäßen Gelenkvorrichtung besteht insbesondere darin, daß alle Rohrverbindungen oder die Verbindungen von Rohren mit Platten durch Schraubvorgänge erfolgen, was eine leichte Lösbarkeit und eine einfache Demontage erlaubt. Dies ist insbesondere für Messesysteme und variabel aufzubauende Möbel von besonderem Vorteil. Die Gelenkvorrichtung kann in einfacher Weise optisch ansprechend ausgebildet werden, vorzugsweise eine Kugelform aufweisen, wobei die Befestigung über die abstehenden Haltebolzen erfolgt. Ein weiterer Vorteil besteht darin, daß beispielsweise zwei Rohre zunächst miteinander verbunden werden und anschließend noch eine Veränderung des Winkels möglich ist. Dieser Winkel kann durch die Schraubverbindung über die Fixierelemente leicht fixiert und wieder gelöst werden. Der Aufbau auch großer Systeme erfolgt mit wenigen identischen Grundbauelementen, die somit in großer Zahl und damit kostengünstig hergestellt werden können. Der Aufbau ist dabei einfach und kostengünstig zu realisieren. Neben der einfachen und schnellen Montage können sowohl die Gelenkvorrichtungen als auch die Rohre und Platten in einer endbehandelten Version verwendet werden, das heißt, es sind keinerlei Nacharbeiten, wie Schleifen oder Lackieren, erforderlich. Eine Wiederverwendung nach der Demontage ist in jedem Falle möglich. In einfacher Weise können ansprechende optische Effekte durch entsprechende Farbgebung der Einzelteile der Gelenkvorrichtung erzielt werden.

Durch die in den Unteransprüchen aufgeführten Maßnahmen sind vorteilhafte Weiterbildungen und Verbesserungen der im Anspruch 1 angegebenen Gelenkvorrichtung möglich.

Um die Gelenkvorrichtung zusammenzuhalten und im eingestellten Winkel zu fixieren, sind die Fixierelemente zweckmäßigerweise jeweils an einem Ende mit einer Abstützverbreiterung versehen.

In einfacher und optisch ansprechender Weise besitzt das Lochelement in einer vorteilhaften Ausgestaltung eine im wesentlichen halbkugelförmige Gestalt. Alternativ hierzu kann das Lochelement auch als Lochscheibe ausgebildet sein, wobei sich die Fixierelemente dann jeweils an Anlageelementen abstützen. Vorzugsweise weisen dabei zwei im wesentlichen kugelschichtförmige aneinanderliegende Lochelemente und zwei jeweils außen daran anliegende, im wesentlichen kugelsegmentförmige Anlageelemente zusammen eine Kugelgestalt auf. Durch die dadurch entstehende glatte, vorsprungsfreie Oberfläche wird eine Verletzungsgefahr oder Gefahr von Beschädigungen durch Hängenbleiben sehr gering. Darüber hinaus wird eine optisch sehr ansprechende Gestalt der Gelenkvorrichtung erzielt.

Wird die Gelenkvorrichtung zur Befestigung einer Platte an einem Rohr oder einer sonstigen Strebe eingesetzt, dann weisen entsprechend ein im wesentlichen kugelschichtförmiges, an der Platte anliegendes Lochelement und zwei jeweils außen anliegende, im wesentlichen kugelsegmentförmige Anlageelemente zusammen im wesentlichen eine Kugelgestalt auf, wobei die bereits erwähnten Vorteile auftreten. Darüber hinaus besteht der große Vorteil, daß mit im wesentlichen denselben Lochelementen und Anlageelementen sowohl Rohre über kugelförmige Gelenkvorrichtungen als auch Rohre mit Platten entsprechend verbunden werden können.

Zur Vervollständigung der Kugelgestalt besitzt die Abstützverbreiterung insbesondere im wesentlichen die Gestalt eines Linsenkopfes und ist im montierten Zustand zum Teil versenkt im jeweiligen Anlageelement angeordnet, wobei der nicht versenkte Bereich eine die Kugelgestalt ergänzende Gestalt besitzt.

Damit zwei miteinander zu verbindende Rohre miteinander fluchten bzw. in einer Ebene angeordnet sind, werden die Haltebolzen vorzugsweise so versetzt am Lochelement fixiert, daß sie zur Mitte der Kugelgestalt hin ausgerichtet sind. Zur Befestigung an einer Platte ist dies nicht erforderlich.

Die erfindungsgemäße Gelenkvorrichtung kann in vorteilhafter Weise auch zur Verbindung von drei oder vier Rohren miteinander eingesetzt werden, indem wenigstens eines der Fixierelemente als Haltebolzen für ein weiteres Rohr ausgebildet ist und an seinem in das jeweilige Lochelement oder Anlageelement eingreifenden Ende mit einem Außen- oder entsprechenden Innengewinde versehen ist.

Der Haltebolzen ist zweckmäßigerweise als Schraubbolzen ausgebildet. Zur Fixierung dieses Haltebolzens in der Längsrichtung in Rohr ist vorzugsweise eine beim Einschrauben des Haltebolzens sich spreizende Spreizvorrichtung vorgesehen, so daß eine einfache und schnelle Befestigung im Rohr möglich ist, die auch wieder leicht lösbar ist. Ein etwa außen sichtbarer Bereich des Haltebolzens, z.B. bei der Befestigung an einer Platte, ist aus optischen Gründen nicht mit einem Gewinde versehen.

Ausführungsbeispiele der Erfindung sind in der Zeichnung dargestellt und in der nachfolgenden Beschreibung näher erläutert. Es zeigen:
- Fig. 1: eine perspektivische Explosionsdarstellung eines Ausführungsbeispiels der erfindungsgemäßen Gelenkvorrichtung zur Verbindung von zwei Rohren miteinander,
- Fig. 2: eine Schnittdarstellung eines gegenüber Fig. 1 modifizierten Ausführungsbeispiels zur Verbindung von drei Rohren miteinander,
- Fig. 3: ein modifiziertes Ausführungsbeispiel zur Verbindung eines Rohrs mit einer Platte und
- Fig. 4: eine Darstellung eines aus Rohren und Platten bestehenden Geländers, bei der die erfindungsgemäße Gelenkvorrichtung in vielfältigen Variationen eingesetzt ist.

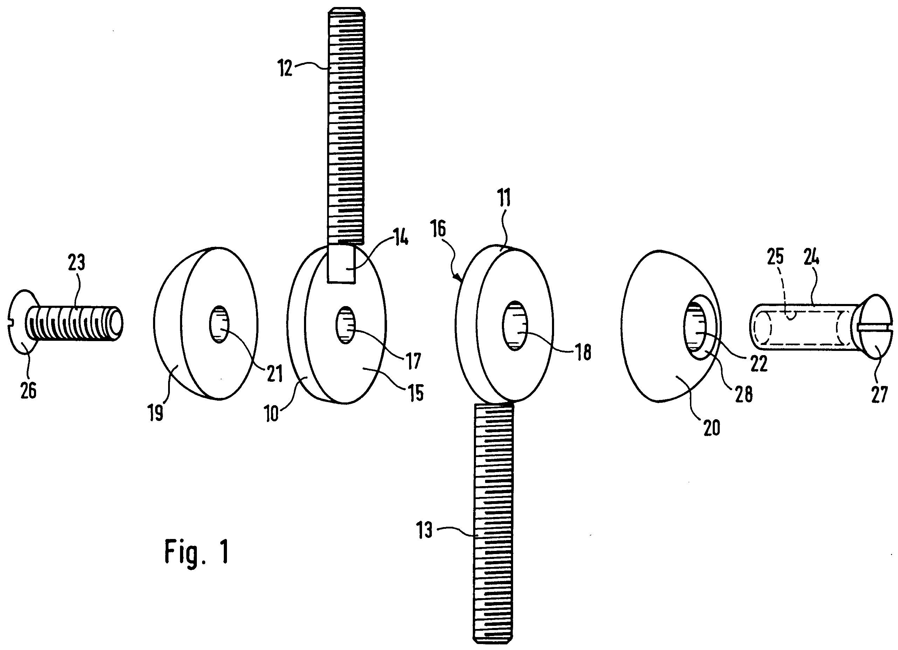

Das in Fig. 1 dargestellte erste Ausführungsbeispiel der Gelenkvorrichtung weist zwei im wesentlichen kugelschichtförmige Lochscheiben 10, 11 auf, an denen jeweils radial bezüglich der Gelenkachse ein als Schraubbolzen ausgebildeter Haltebolzen 12, 13 fixiert ist, z.B. durch Anschweißen. Hierzu wird ein Fortsatz 14 in eine entsprechend geformte Ausnehmung der Lochscheiben 10, 11 eingesetzt und verschweißt. Die im montierten Zustand aneinanderliegenden Flächen der Lochscheiben 10, 11 bilden die Gelenkflächen 15, 16, die bei einer Winkelveränderung der Haltebolzen aneinander entlanggleiten. Die Haltebolzen 12, 13 sind so versetzt an den Lochscheiben 10, 11 fixiert, daß ihre jeweiligen Mittelachsen in den Ebenen der jeweiligen Gelenkflächen 15, 16 verlaufen und diese Mittelachsen somit bei aneinanderliegenden Gelenkflächen 15, 16 in allen Winkelstellungen in der gleichen Ebene liegen. Senkrecht zur Ebene der Gelenkflächen 15, 16 besitzen die Lochscheiben 10, 11 zentrale Durchgangslöcher 17, 18.

An den den Gelenkflächen 15, 16 gegenüberliegenden Seiten der Lochscheiben 10, 11 liegen im montierten Zustand kugelsegmentförmige Anlageelemente 19, 20 an, die ebenfalls zentrale Durchgangslöcher 21, 22 besitzen, die mit den Durchgangslöchern 17, 18 fluchten. Die Anlageelemente 19, 20 und die Lochscheiben 10, 11 werden im montierten Zustand durch zwei Fixierelemente 23, 24 zusammengehalten, wobei das Fixierelement 23 als Gewindeschraube ausgebildet ist, die in eine Gewindebohrung 25 des Fixierelements 24 einschraubbar ausgebildet ist. Die Fixierelemente 23, 24 besitzen linsenkopfartige Abstützverbreiterungen 26, 27, die im montierten Zustand teilweise in Versenkungen 28 der Anlageelemente 19, 20 eingreifen und im übrigen so gestaltet sind, daß sie zusammen mit den Lochscheiben 10, 11 und den Anlageelementen 19, 20 eine Kugelgestalt bilden.

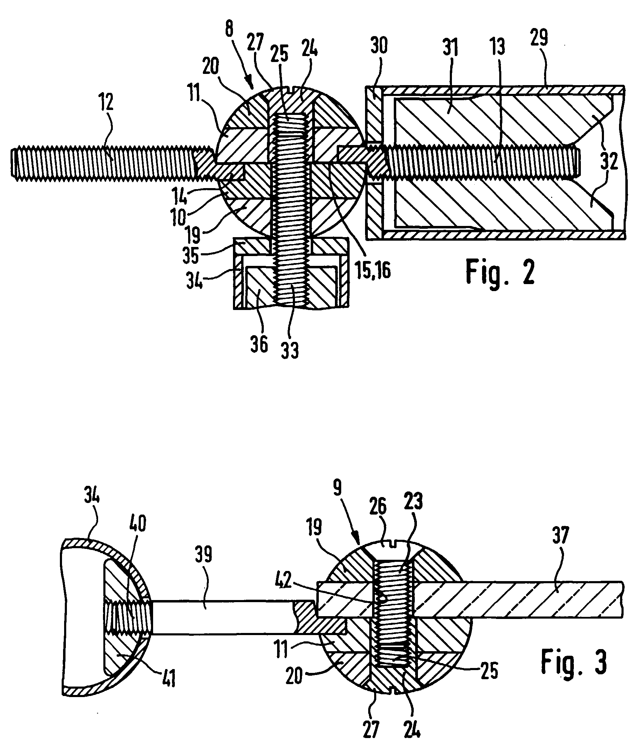

Die Haltebolzen 12, 13 können durch Verschiebung der Gelenkflächen 15, 16 aneinander in praktisch beliebigen Winkelstellungen positioniert werden, und die jeweilige Position kann durch Anziehen der Fixierelemente 23, 24 fixiert werden. Die Fixierung der Haltebolzen 12, 13 in den miteinander zu verbindenden Rohren ist in Fig. 2 dargestellt und in Verbindung mit Fig. 2 näher erläutert.

Die Lochscheiben 10, 11, die Anlageelemente 19, 20 und die Fixierelemente 23, 24 bestehen aus Metall, wobei zur unterschiedlichen Farbgebung entsprechende Lackierungen, Beschichtungen, Eloxierungen od.dgl. möglich sind. Falls bei einer speziellen Anwendung keine besondere Festigkeit benötigt wird, sind auch Ausführungen in Kunststoff denkbar.

Da der Gewindebereich des als Gewindeschraube ausgebildeten Fixierelements 23 einen geringeren Durchmesser als das Fixierelement 24 besitzt, können die Durchgangslöcher 21, 17 ebenfalls einen entsprechend angepaßten geringeren Durchmesser als die Durchgangslöcher 18, 22 aufweisen.

Bei dem in Fig. 2 dargestellten modifizierten Ausführungsbeispiel sind gleiche oder gleichwirkende Bauteile mit denselben Bezugszeichen versehen und nicht nochmals beschrieben. Der Haltebolzen 13 greift hier in ein erstes zu fixierendes Rohr 29 ein, das an seinem zur kugelförmigen Gelenkvorrichtung hinweisenden Ende durch eine Abdeckscheibe 30 abgeschlossen ist. Der Haltebolzen 13 greift durch diese Abdeckscheibe 30 in das Rohr 29 ein und ist dort in ein Spreizelement 31 eingeschraubt, das nach Art eines Schraubdübels ausgebildet ist. Je weiter der Haltebolzen 13 in dieses Spreizelement 31 eingeschraubt wird, desto mehr spreizen sich Spreizflügel 32 dieses Spreizelements 31 radial nach außen und verklemmen sich mit dem Rohr 29. Auf die Darstellung einer entsprechenden Rohrfixierung am Haltebolzen 12 wurde zur Vereinfachung der Zeichnung verzichtet. Auch das in Fig. 1 dargestellte Ausführungsbeispiel der Gelenkvorrichtung kann auf diese Weise zur Verbindung von zwei Rohren unter variablen Winkeln eingesetzt werden.

Im Unterschied zum ersten Ausführungsbeispiel ist bei dem in Fig. 2 dargestellten modifizierten zweiten Ausführungsbeispiel das als Halteschraube ausgebildete Fixierelement 23 durch einen als Gewindebolzen ausgebildeten Haltebolzen 33 ersetzt. Dieser ist in das Fixierelement 24 einschraubbar ausgebildet und erstreckt sich - wie die Haltebolzen 12, 13 - von der kugelförmigen Gelenkvorrichtung aus radial nach außen in ein weiteres Rohr 34 hinein, das im Ausführungsbeispiel einen geringeren Außendurchmesser besitzt. Dies soll zeigen, daß die kugelförmige Gelenkvorrichtung mit Rohren verschiedener Durchmesser verbunden werden kann. Die Fixierung dieses Rohrs 34 erfolgt in entsprechender Weise, das heißt, dieses Rohr 34 ist ebenfalls durch eine Abdeckscheibe 35 abgedeckt, und der Haltebolzen 33 greift im Rohr-Inneren in ein Spreizelement 36 ein, das zur Vereinfachung nur als Teildarstellung wiedergegeben ist.

Wenn vier Rohre miteinander verbunden werden sollen, so kann auch noch das Fixierelement 24 durch einen weiteren Haltebolzen ersetzt werden, der an seinem in die kugelförmige Gelenkvorrichtung eingreifenden Ende mit einer entsprechenden Gewindebohrung versehen ist.

Bei dem in Fig. 2 dargestellten Ausführungsbeispiel kann die Versenkung 28 - wie dargestellt - am Anlageelement 19 entfallen, sie kann jedoch gleichwohl vorhanden sein.

Bei dem in Fig. 3 dargestellten dritten Ausführungsbeispiel sind wiederum gleiche oder gleichwirkende Bauteile mit denselben Bezugszeichen versehen und nicht nochmals beschrieben.

Hier dient eine modifizierte kugelförmige Gelenkvorrichtung zur Fixierung einer Platte 37 an einem Rohr 34 in einem einstellbaren Abstand. Die Lochscheibe 11 besitzt hier in Abwandlung zu den bisherigen Ausführungsbeispielen einen Haltebolzen 39, der lediglich an seinem von der Lochscheibe 11 entfernten Endbereich mit einem Gewinde 40 versehen ist. Dieses Gewinde 40 wird radial in das Rohr 34 eingeschraubt, und zwar in ein innen am Rohr 34 anliegendes Halteelement 41 mit einer entsprechenden Gewindebohrung. Wenn das Rohr 34 eine ausreichend dicke Rohrwandung besitzt, dann kann dieses Halteelement 41 auch entfallen. Das Einschrauben erfolgt bis zum Gewindeende, wobei dort auch noch ein Abstütz- und Anlagering vorgesehen sein kann, der nicht dargestellt ist. Selbstverständlich kann auch der Haltebolzen 39 prinzipiell ein sich über seine gesamte Länge erstreckendes Gewinde besitzen, wenn dieses optisch nicht stört. Ein solches Gewinde kann beispielsweise auch durch eine Rohrhülse abgedeckt werden.

Die zweite Lochscheibe 10 mit dem Haltebolzen 12 entfällt, und an ihre Stelle tritt die eine entsprechende Dicke aufweisende Platte 37, so daß wieder die entsprechende Kugelform gebildet wird. Die Platte 37 besitzt hierzu eine entsprechende Durchgangsbohrung 42 für das Fixierelement 23.

Sollte die Platte 37 eine geringere Dicke aufweisen und soll dennoch die Kugelgestalt erhalben bleiben, so kann entweder ein entsprechend vergrößertes Anlageelement 19 oder eine zusätzliche kugelschichtförmige Zwischenscheibe eingesetzt werden.

Bei diesem Ausführungsbeispiel braucht der Haltebolzen 19 nicht unbedingt versetzt zur Lochscheibe 11 fixiert sein, wie dies dargestellt ist. Er kann auch mit der Lochscheibe 11 selbst fluchten, insbesondere dann, wenn sich der Haltebolzen 39 mit der Platte 37 überlappen soll.

Die Gelenkflächen 15, 16 können auch eine Haftstruktur, beispielsweise eine Riffelung, aufweisen, um nach dem Spannen der Fixierelemente eine noch bessere Winkelfixierung zu erreichen.

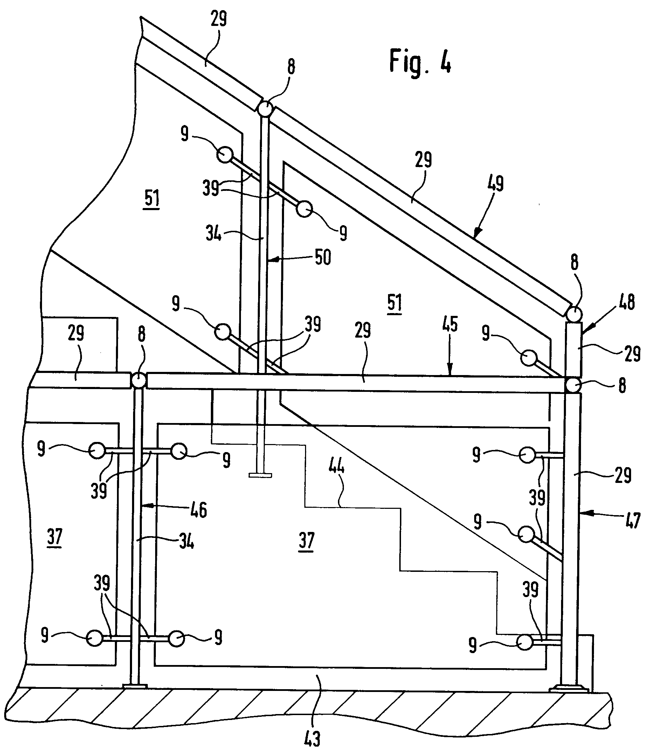

In Fig. 4 ist ein Geländer dargestellt, das zum Teil für einen Flur 43 und zum Teil für eine Treppe 44 eingesetzt ist. Ein Handlauf 45 für den Flur 43 besteht aus zwei Rohren 29, die über eine Gelenkvorrichtung 8 gemäß Fig. 2 miteinander fluchtend verbunden sind. Zwischen dem Flur 43 und der Gelenkvorrichtung 8 erstreckt sich eine vertikale, durch ein Rohr 34 gebildete Stütze 46. Der Handlauf 45 ist an seinem Ende über eine weitere Gelenkvorrichtung 8 mit einer vertikalen, aus einem Rohr 29 gebildeten Stütze 47 sowie mit einem schräg nach oben und hinten verlaufenden, aus einem Rohr 29 bestehenden Zwischenstück 48 verbunden, das den Handlauf 45 des Flurs mit einem schräg nach oben verlaufenden Handlauf 49 der Treppe 44 verbindet. Das Zwischenstück 48 ist dabei mit dem Handlauf 49 über eine weitere Gelenkvorrichtung 8 verbunden, die noch zusätzlich zu einer weiteren vertikalen Stütze vorgesehen ist, die in der Darstellung hinter der Stütze 47 liegt und daher nicht erkennbar ist. Der Handlauf 49 besteht wiederum aus zwei Rohren 29, die über eine weitere Gelenkvorrichtung 8 fluchtend miteinander verbunden sind. Von dieser Gelenkvorrichtung 8 erstreckt sich eine weitere vertikale Stütze 50 nach unten zur Treppe 44 hin, die wiederum aus dem dünneren Rohr 34 besteht.

In den jeweils durch ein Rohr 29 des Handlaufs 45, zwei vertikalen Stützen 34 bzw. 47 und dem Flur 43 begrenzten Flächen sind rechteckige Platten 37 aus durchsichtigem Material, beispielsweise Glas oder Kunststoff, eingesetzt und jeweils mittels vier Gelenkvorrichtungen 9 gemäß Fig. 3 an der Stütze 34 bzw. der Stütze 47 fixiert. Entsprechend sind unterhalb des schrägen Handlaufs 49 für die Treppe parallelogrammförmige Platten 51 jeweils mittels vier Gelenkvorrichtungen 9 mit der Stütze 50 bzw. an der hinter der Stütze 47 liegenden, in der Zeichnung nicht erkennbaren Stütze fixiert. Der Winkel der Haltebolzen 39 ist an den Parallelogrammwinkel angepaßt, wobei diese Haltebolzen 39 unter entsprechendem Winkel in die jeweiligen Stützen eingeschraubt sind.

In entsprechender Weise lassen sich auch Möbelstücke, Regale, Trennwände, Messesysteme und dgl. aus Rohren und Gelenkvorrichtungen zusammensetzen, wobei maximal vier Rohre an einer kugelförmigen Gelenkvorrichtung miteinander verbunden werden können.

Anstelle der Kugelform können prinzipiell auch andere Formgestaltungen für die Gelenkvorrichtung treten, wie Würfel und andere Vielflächenelemente. Die Gestaltung der Lochscheiben 10, 11, der Anlageelemente 19, 20 und der Abstützverbreiterungen 26, 27 ändert sich dann jeweils entsprechend.

Wenn eine Befestigung für Platten nicht vorgesehen ist, kann jeweils eine Lochscheibe 10, 11 zusammen mit einem Anlageelement 19, 20 ein einstückiges Teil bilden.

Wenn mehr als vier Rohre mit einer Gelenkvorrichtung verbunden werden sollen, dann werden an den Lochelementen jeweils mehr als ein Haltebolzen angebracht bzw. angeschweißt.

## Patentansprüche

1. Gelenkvorrichtung zur Verbindung von Rohren miteinander unter variablen Verbindungswinkeln und/oder zur Verbindung von Rohren mit Platten, dadurch gekennzeichnet, daß ein mit wenigstens einem in einem Rohr (29, 34) fixierbaren Haltebolzen (13, 19) radial bezüglich der Gelenkachse verbundenes Lochelement (11) mit einer Gelenkfläche (16) vorgesehen ist, die im montierten Zustand an der Gelenkfläche (15) eines zweiten, entsprechend ausgebildeten Lochelements (10) oder an der am Rohr (34) zu befestigenden, ein mit dem Loch (18) des Lochelements (11) fluchtendes Loch (42) aufweisenden Platte (37) anliegt, und daß zwei sich in den jeweils miteinander fluchtenden Löchern (17, 18 bzw. 42, 18) erstreckende Fixierelemente (23, 24, 33) zur Fixierung der beiden Lochelemente (11, 10) oder des einen Lochelements (11) und der Platte (37) aneinander vorgesehen sind, wobei das erste, ein Außengewinde aufweisende Fixierelement (23, 33) in das zweite, ein Innengewinde (25) aufweisende Fixierelement (24) einschraubbar ausgebildet ist.

2. Gelenkvorrichtung nach Anspruch 1, dadurch gekennzeichnet, daß die Fixierelemente (23, 24) jeweils an einem mit einer Abstützverbreiterung (26, 27) versehen sind.

3. Gelenkvorrichtung nach Anspruch 1 oder 2, dadurch gekennzeichnet, daß das Lochelement eine im wesentlichen halbkugelförmige Gestalt besitzt.

4. Gelenkvorrichtung nach Anspruch 1 oder 2, dadurch gekennzeichnet, daß das Lochelement (10, 11) als Lochscheibe ausgebildet ist.

5. Gelenkvorrichtung nach Anspruch 4, dadurch gekennzeichnet, daß sich die Fixierelemente (23, 24, 33) jeweils an Anlageelementen (19, 20) abstützen.

6. Gelenkvorrichtung nach Anspruch 4 oder 5, dadurch gekennzeichnet, daß zwei im wesentlichen kugelschichtförmige aneinanderliegende Lochelemente (10, 11) und zwei jeweils außen daran anliegende, im wesentlichen kugelsegmentförmige Anlageelemente (19, 20) zusammen eine Kugelgestalt aufweisen.

7. Gelenkvorrichtung nach Anspruch 4 oder 5, dadurch gekennzeichnet, daß ein im wesentlichen kugelschichtförmiges, an der Platte (37) anliegendes Lochelement (11) und zwei jeweils außen daran anliegende, im wesentlichen kugelsegmentförmige Anlageelemente (19, 20) zusammen im wesentlichen eine Kugelgestalt aufweisen.

8. Gelenkvorrichtung nach Anspruch 6 oder 7,dadurch gekennzeichnet, daß die Abstützverbreiterung (26, 27) im wesentlichen die Gestalt eines Linsenkopfes besitzt und im montierten Zustand zum Teil versenkt im jeweiligen Anlageelement (19, 20) angeordnet ist und der nicht versenkte Bereich eine die Kugelgestalt ergänzende Gestalt besitzt.

9. Gelenkvorrichtung nach einem der Ansprüche 3 bis 8, dadurch gekennzeichnet, daß der Haltebolzen (12, 13, 39) so versetzt am Lochelement (10, 11) fixiert ist, daß er zur Mitte der Kugelgestalt hin ausgerichtet ist.

10. Gelenkvorrichtung nach einem der vorhergehenden Ansprüche, dadurch gekennzeichnet, daß wenigstens eines der Fixierelemente (33) als Haltebolzen für ein weiteres Rohr (34) ausgebildet ist und an seinem in das jeweilige Lochelement (10) oder Anlageelement (19) eingreifenden Ende mit einem Außen- oder entsprechenden Innengewinde versehen ist.

11. Gelenkvorrichtung nach einem der vorhergehenden Ansprüche, dadurch gekennzeichnet, daß der Haltebolzen (12, 13, 33) als Gewindebolzen ausgebildet ist.

12. Gelenkvorrichtung nach Anspruch 11, dadurch gekennzeichnet, daß zur Fixierung des Haltebolzens (12, 13, 33) im Rohr (34, 29) eine beim Einschrauben des Haltebolzens sich spreizende Spreizvorrichtung (36, 31) vorgesehen ist.
